# EUROPEAN PATENT SPECIFICATION

(11) **EP 1 524 870 B1**
(45) Date of publication and mention of the grant of the patent: **27.08.2008**
(21) Application number: 03023516.2
(22) Date of filing: 15.10.2003
(51) Int. Cl.: H04Q 7/32, H04L 29/08

(54) **Method for communicating information in a preferred language from a server via a mobile communication device**
Verfahren zum Mitteilen von Informationen in einer bevorzugten Sprache von einem Server über ein mobiles Kommunikationsgerät
Procédé pour la communication d'information dans une langue préférée d'un serveur via un dispositif de communication mobile

(43) Date of publication of application: 20.04.2005
(73) Proprietor: Harman Becker Automotive Systems GmbH, 76307 Karlsbad (DE)
(72) Inventor: Hennecke, Marcus, Dr., 89075 Ulm (DE)
(74) Representative: Grünecker, Kinkeldey, Stockmair & Schwanhäusser Anwaltssozietät

(56) References cited:
- EP-A- 1 231 798
- WO-A-00/52921
- WO-A-01/41490
- WO-A-02/087098
- US-A- 6 073 013
- US-A1- 2002 007 418

## Description

The invention is directed to a method for communication information from a sever via a mobile communication device, in particular, to a method for providing information by a server and a method for receiving information by a mobile communication device in a multilingual environment.

Mobile communication devices, such as mobile phones, personal digital assistants (PDA) with a telephone module, mobile digital assistants (MDA) or automotive head units with a telephone module can be used for acquiring information in different ways. A typical example would be to call a travel agency and to ask a corresponding travel agent for flight information. Another example is calling directory assistance.

More and more often, part or all of the requested information services are provided by automated systems. In such a case, a customer calls a person and is - at a certain stage of the dialog - connected to a computer which provides the requested information. In some cases, the user even directly calls a server or a computer which itself is configured to enter a kind of dialog with the customer. During such a dialog, the customer is prompted to enter a question or to tell the system what information is to be provided.

However, it might happen that a user visits a foreign country but does not master the corresponding language or speaks the language only badly. In such a case, a user has difficulty to obtain the desired information. He can call an information service and hope that his language capabilities are sufficient to make him understood and to understand the information provided by the information service or that a human operator is available speaking a language familiar to the user.

Therefore, it is the problem underlying the invention to provide a method for communicating information from a server via a mobile communication device which enables acquiring information in an automated multilingual way.

US 2002/007418 A1 discloses a method for deliving a playlist to a requesting device over a network and monitoring the performance on the device. Attributes of the requesting device are determined to increase performance of the playlist.

EP -A1-1 231 798 discloses a language selecting method and a mobile communication system by which languages can be frequently switched for transmitting information to a mobile terminal. In the mobile communication system of the present invention, when a user selects a language from various languages in which image data stored beforehand in a mobile station is formed, a mobile terminal stores language select information corresponding to the language selected by the user. When starting communication, the mobile terminal transmits a transmission request signal containing the language select information to a service providing apparatus. The service providing apparatus then transmits audio guidance in the language corresponding to the language select information contained in the received transmission request signal to the mobile terminal.

WO 01 41490 A discloses a method for dialling services in a mobile telecommunication network. A set of stored character strings used for comparison with character strings entered by a subscriber to call a service is modified, if a mobile user equipment switches from or to a visited telecommunication network. In case that an entered character string matches a stored one, it is translated into a service identifier

WO 02 087098 A discloses a method and apparatus of delivering interactive voice response services over a network.

US -A- 6 073 013 discloses a mobile telephone system that employs a fleet of satellites and a set of gateway ground stations arranged around the globe for handling communications to and from mobile communication units such as mobile telephones.

WO 00 52921 A discloses a method and apparatus for a user to pay a cellular communications network for service when roaming. The method comprises the user communicating with a financial resource over a cellular communications radio link to request an electronic currency credit.

This problem is solved by a method for providing information according to claim 1.

Mobile communication devices are portable devices that allow for a wireless transmission of signals. Typical mobile communication devices are mobile phones, PDA's, MDA's, smart phones or automotive head units. The mobile communication device can comprise a means for establishing a wireless data connection to a server via a telephone or another network, particularly, a digital network; an example for such a means would be a GSM (Global System for Mobile Communications) module.

A server is a computer for providing resources, in particular, information data. Any kind of information can be provided in this way, for example, phone numbers, travel information such as flight connections, or electronic maps.

A preferred language of a mobile communication device is a human language the mobile communication device or some parts or modules thereof are configured with. In particular, a preferred language can be the language to which the mobile communication device is set for operation by the user, i.e., the language in which it communicates with or prompts the user. In principle, a mobile communication device need not have only one preferred language; for example, several different languages can be configured, or different modules or capabilities of a mobile communication device can be configured with different languages.

Compared to the prior art, the advantage of the method according to the invention consists in that a preferred language of the mobile communication device is automatically determined and the mobile communication device is provided with information in a preferred language. Because of that, a user need not enter a dialog with an information service by himself in a language he is not familiar with, but he can obtain the information automatically in a preferred language of the mobile communication device.

Preferably, step a) of claim 1 can comprise requesting preferred language information by the server from the mobile communication device. Preferred language information are data comprising the preferred language(s) of the mobile communication device. Thus, the server takes the initiative and ask the mobile communication device for the preferred language(s). If the mobile communication device does not provide the language information on its on motion, the server obtains this information only upon its request. This is useful if, for example, a server is contacted that does not have the capability to automatically determine a preferred language. In such a case, it is not necessary for the mobile communication device to transmit corresponding data to the server and provide language information.

Advantageously, the requesting step can comprise requesting the language settings of the mobile communication device and/or of a speech recognition means of the mobile communication device. This is an advantageous way to obtain the relevant language information since the language settings of the mobile communication device itself or a speech recognition means of the mobile communication device most likely correspond to a language the user of the mobile communication device is familiar with.

Step a) of claim 1 comprises determining at least two preferred languages and ranking the preferred languages according to a predetermined criterion. In this way, if the mobile communication device is configured with more than one language, and, thus, has more than one preferred language, there is a selection possible between these different languages. In order to select one preferred language, it is necessary to make a ranking yielding a "most preferred" language the server can use for further processing.

A translation means for more than one language is present, each translation means has an assigned performance value, and the preferred languages are ranked according to the performance value. This is particularly useful if the desired information is provided via a translation means - being present in the server or the mobile communication device - for the preferred language.

Preferably, in step b), the preferred language for the provided information can be selected from the at least two preferred languages based on the ranking. In other words, the language ranked best will be the language to be selected and, thus, used by the server to provide information for the mobile communication device in a most suitable way.

According to a preferred embodiment, each preferred language of the mobile communication device can have an assigned priority and the preferred languages can be ranked based on the priority. Thus, each preferred language has a previously assigned priority. A user of the mobile communication device, for example, could have assigned these priorities. Thus, the ranking and selection of a preferred language corresponds to the preferences of a user.

According to an alternative example, the settings of the mobile communication device could be such that the language for the operation of the mobile communication device is automatically assigned a higher priority than a different language of a speech recognition means present in the mobile communication device or vice versa. In such a case, the different languages would have a predetermined priority.

If more than one translation means, i.e. translation means for a translation into more than one language, are present, it is desirable to distinguish these translation means in some way. This is achieved by assigning a performance value to each translation means. The performance value can be based on the quality of the translation. For example, a performance value can be obtained by translating a test sentence into different languages by the corresponding translation means and counting the translation errors. Alternatively, the performance value can be based on the size of the vocabulary set a translation means is using.

Advantageously, the preferred languages can be ranked based on the priority and the performance value. In this way, the criterion is based on both parameters. For this, the priority and the performance value can be given different weights and be summed so as to obtain a combined value for the ranking.

According to a preferred embodiment, step b) can comprise providing a dialog script for the mobile communication device by the server for performing a dialog between the mobile communication device and a user, and running the dialog script on the mobile communication device.

A dialog script comprises instructions for the mobile communication device for causing the mobile communication device performing a dialog between the device and the user. In particular, the dialog script comprises instructions for the mobile communication device on how to prompt a user and how to react on a user's input. The language of a dialog script is the language in which a user is prompted when running the dialog script.

Therefore, a user can acquire information by way of a dialog. Since the dialog script is run on the mobile communication device, the dialog for receiving information is simplified and improved. Only at the beginning, when a user is contacting an information server for acquiring information, a data connection between the mobile communication device and the server is required for transmitting the dialog script from the server to the mobile communication device. After that, during the dialog, a connection is in principle only necessary under special circumstances as will be described later. Thus, the time a connection between a server and a mobile communication device has to be held up is reduced. Furthermore, since the dialog script is run on a mobile communication device, the load of the server is relieved, particularly if many users are requesting information from the same server.

Furthermore, if, for example, a speech input is enabled, the speech signal can be processed directly on the mobile communication device with a higher bandwidth, and distortions of the signal due to the transmission to the server (for example, via a GSM channel) can be avoided.

Preferably, providing a dialog script can comprise selecting a dialog script for the preferred language by the server. If a dialog script for the preferred language is already available on the server, acquiring and providing information from a server is enabled in a very simple and effective way, in particular, since no translation is necessary during the dialog.

According to preferred embodiment of the above-described methods, step b) can comprise activating a translation means of the server and/or the mobile communication device for the preferred language. This is useful if the information is only available in a language not being a preferred language. In such a case, if a corresponding translation means is present with the server and/or the mobile communication device, the information can be translated automatically into the preferred language a user is familiar with.

According to preferred embodiment, activating a translation means can be performed if no dialog script for the preferred language can be selected. In other words, the processing time consuming translation is only to be effected if no dialog script for the corresponding language is available.

According to a preferred embodiment, step b) can comprise acoustically and/or optically prompting the user and/or presenting information to the user. Therefore, the different capabilities of a mobile communication device can be exploited. In particular, presenting a prompt or information on a display is useful if this output is rather complex or complicated.

Preferably, optically presenting can comprise presenting on a touch screen, in particular, wherein a part of the presented information or of the prompt is selectable via the touch screen. A touch screen is a display device that also serves as input. An input can be made using a finger or a corresponding pen, for example.

This results in a highly simplified dialog for the user which can react on an output by directly manipulating or selecting a part of this output.

Advantageously, step b) can comprise acquiring an acoustic and/or haptic and/or graphic input. This allows a user to make an input in the respective most suitable way.

A haptic input comprises both an input via keys or via selecting on a touch screen. For example, information representing different alternatives to be selected by the user can be displayed on a touch screen such that the user can select one of the alternatives directly via the touch screen. A graphical input is a touch screen input wherein the user provides the input in a graphical way, for example, by writing the input on the touch screen by hand using a corresponding pen.

Preferably, acquiring an acoustic input can comprise processing the acoustic input using speaker independent and/or speaker dependent speech recognition. Advantageously, acquiring a graphical input can comprise processing the input using character recognition.

According to a preferred embodiment of the previously described methods, step b) can comprise selecting a human operator for the preferred language. Thus, the server has determined a preferred language and automatically selects a corresponding human operator. In this way, a user can also be connected to an operator speaking the language familiar to the user. The operator can then search for the required information, for example, and provide the information to the user by transmitting it from the server to the mobile communication device.

Preferably, step b) can comprise running a dialog script on the server for performing a dialog between the server and a user. Thus, a user can acquire information via a dialog with the server. If, at the same time, a dialog between the mobile communication device and the user is running, one can have a distribution of the dialog between the user on the one side and the mobile communication device and the server on the other side. This is particularly useful if at one stage during the dialog between the mobile communication device and the user, the capabilities of the mobile communication device are not sufficient for further continuation. Then, the server can take over for this part of the dialog.

In some cases, it might also happen that the mobile communication device needs additional data to continue a dialog. For example, if the user is requesting timetable information, the memory of the mobile communication device might be too small to store all possible destinations or the required time for transmitting all the destinations to the mobile communication device might be too long. In such a case, a dialog between the user and the server can be useful such that, for example, a speech input from the user is processed by the server, which, then transmits the resulting data (e.g. a specific destination) to the mobile communication device for continuation of the dialog between the mobile communication device and the user. In this way, one has both a dialog between the user and the mobile communication device and - via the mobile communication device - a dialog between the user and the server.

Preferably, running a dialog script on the server can be initiated by the mobile communication device. Thus, there is mainly a dialog between the mobile communication device and the user and the server enters the dialog only if necessary, i.e. upon initiation by the mobile communication device.

The invention also provides a method for receiving information by a mobile communication device from a server, comprising automatically transmitting preferred language information from the mobile communication device to the server.

This method enables a user to acquire information from a server via a mobile communication device in a specific language. Preferred language information is transmitted automatically from the mobile communication device to the server so that the server knows about the preferred language and can provide the required information accordingly.

Preferably, automatically transmitting can be performed upon request of the server. This is particularly useful in a case where the user or the mobile communication device does not know whether the contacted server has any multilingual capabilities, in other words, whether the server is able to provide the information in different languages. Transmitting the preferred language information from the mobile communication device to the server is mainly useful if the server can also process this information. Hence, the method is more effective if the language information is only transmitted automatically upon request of the server. Such a request can consist, for example, in a signal prompting the mobile communication device to transmit the corresponding preferred language information.

According to a preferred embodiment, the previously described methods for receiving information can comprise transmitting the language settings of the mobile communication device and/or of a speech recognition means of the mobile communication device. These language settings typically indicate languages the user is familiar with.

Preferably, the above-described methods can further comprise receiving a dialog script for performing a dialog between the mobile communication device and a user from the server, and running the dialog script on the mobile communication device. In this way, via a dialog between the user and the mobile communication device, the user can acquire information in a simple and efficient way.

Preferably, the above-described methods can further comprise initiating running a dialog script on the server for performing a dialog between the server and a user. This allows that the server also enters into a dialog with the user, which is particularly useful if, in principle, a dialog is already performed between the mobile communication device and the user, but - at a certain stage - the capabilities of the mobile communication device are not sufficient for further continuation.

Preferably, the above methods can further comprise activating a translation means of the mobile communication device for the preferred language. Particularly if no dialog script for a preferred language is available, a multilingual environment is provided by the use of a translation means. In particular, a prompt or an information output can be translated into a preferred language that a user is familiar with.

Furthermore, the invention provides a method for communicating information from a server via a mobile communication device, comprising the steps of
establishing a data connection between the server and the mobile communication device,
providing information from a server according to the above described methods for providing information, and
receiving information by a mobile communication device according to the above described methods for receiving information.

The invention also provides a computer program product, comprising or more computer readable media having computer-executable instructions for performing the steps of one of the above-described methods.

Further features and advantages of the invention will be described in the following with reference to the examples and the figures.
- Fig. 1: is a flow diagram illustrating a method for communicating information from a server via mobile communication device;
- Fig. 2: is a flow diagram illustrating a method for providing information by a server;
- Fig. 3: is a flow diagram illustrating a method for receiving information via a mobile communication device; and
- Fig. 4: is a flow diagram illustrating the running of a dialog script on a mobile communication device.

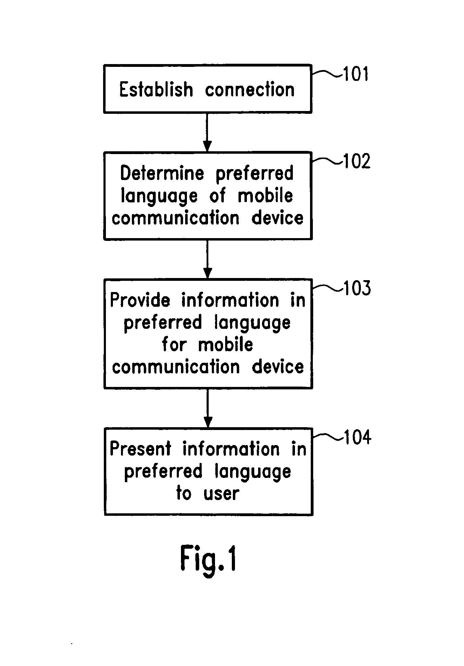

In Fig. 1, the course of action for an example of a method for communicating information from a server to a user via a mobile communication device is illustrated.

In a first step 101, a connection between a mobile communication device such as a mobile phone, a PDA, a smart phone or an automotive head unit (e.g. for car radio navigation systems and mobile phone) comprising a means for mobile communication such as a GSM module and a server is established via a corresponding network. This can be achieved, for example, by manually dialing a corresponding phone number or can be initiated automatically upon occurrence of a specific event.

The server can be any device for providing information such as a computer of a travel agency, a directory assistance, or a service for booking a hotel. Because of the mobile communication device, the connection is established in a wireless way, for example, via a common digital mobile phone network or another network.

After the connection being established, in step 102, a preferred language of the mobile communication device is determined. Different possibilities for determining a preferred language will be described in more detail below. It is to be noted, however, that it is also possible to determine more than one preferred language depending on the settings of the mobile communication device, for example. This step of determining a preferred language is performed by the server for which the server needs the corresponding language information from the mobile communication device.

In the following step 103, the server provides information in a preferred language for the mobile communication device. Also this step will be described in more detail below. in particular, there are different possibilities to provide information. In the simplest case, for example, the information simply consists of some data (e.g., the current time if a speaking clock has been called) that can be provided without further information required from the user. In this case, the information can be transmitted directly to the mobile communication device. In more complex cases, however, it might be necessary to enter a dialog with a user.

In the last step 104, the information is presented in a preferred language to the user. The information can be presented in different ways, in particular, using the capabilities of the mobile communication device. Thus, the information can be presented acoustically and/or optically wherein in the latter case, the information can even be presented on a touch screen display.

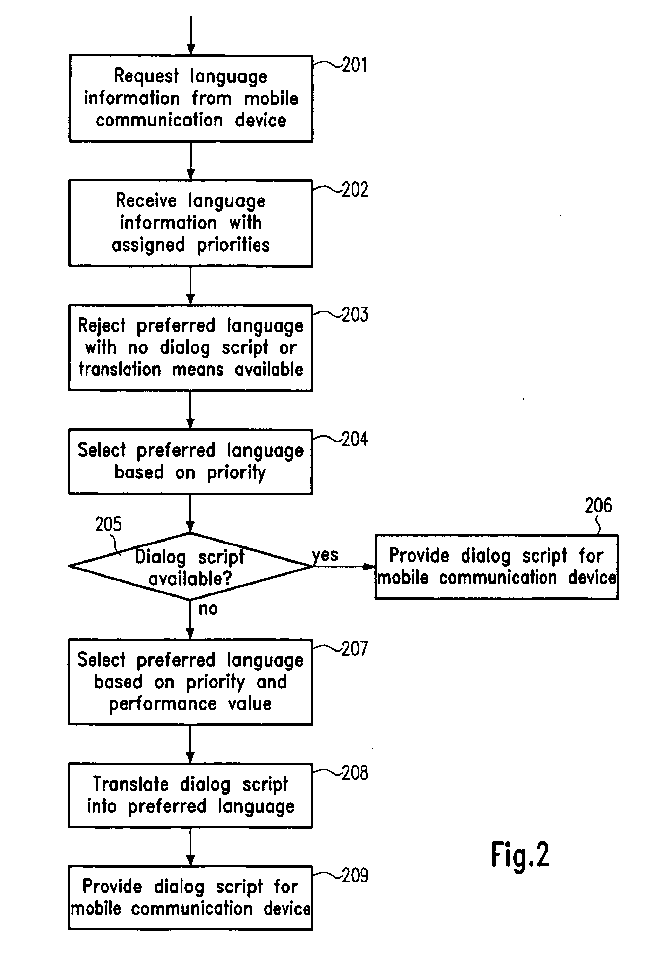

In the following, a method for providing the information by a server will be explained with reference to Fig. 2. In the illustrated example, after a connection between the mobile communication device and the server is established, the server requests in the first step 201 language information from the mobile communication device. Of course, this is only one possible example; it is also possible that the mobile communication device automatically transmits the language information after establishing the connection without explicit requests from the server.

In the following step 202, the language information is received by the server wherein each preferred language has an assigned priority, i.e. the language information comprises the one or several preferred languages of the mobile communication device together with the corresponding priority. The preferred languages are the languages the mobile communication device itself or some of its modules or elements are configured with. Alternatively or additionally, the mobile communication device can also have an explicit list of preferred languages previously stored by a user.

Particularly if the language information comprises more than one preferred language, it is useful that each preferred language has an assigned priority. Such a priority could have been explicitly assigned by a user. For example, if the mobile communication device has a stored list of preferred languages, this list can also comprise corresponding priorities.

Alternatively, the priority can also depend on where the preferred language comes from, i.e. whether it is the language for operating the mobile communication device itself or the language of a speech recognition means, for example. In this case, a preferred language has priority corresponding to the importance or priority of the module that it stems from. This priority of the devices or modules has to be determined or stored in some way. For example, the mobile communication device can be configured such that the priority of the language for operating the mobile communication device itself is highest whereas the priority of a speech recognition means of the mobile communication device is lower than this highest priority. The priorities can be given numbers in ascending order (1, 2, 3, ...) for example.

As described above, the server can receive the language information with the priorities already assigned to the preferred languages. However, it is also possible that the server only receives a list of preferred languages (if more than one language is present in the mobile communication device) and, for example, the information from which device or module being part of the mobile communication device from which the corresponding language stems. Then, the server can rank the preferred languages according to a predetermined criterion, in particular, based on the type of device or module of the mobile communication device the language belongs to.

In step 203, each language for which neither a dialog script nor a translation means is available is rejected. In principle, translation means on the server and/or on the mobile communication device can be considered. If translation means of the mobile communication device are to be considered, however, corresponding information has to be provided for the server by the mobile communication device. This can be achieved by transmitting a list of available translation means together with the language information from the mobile communication device to the server.

Of course, if the language information from the mobile communication device only comprises one language, neither assigning priorities nor selecting one of the preferred languages is necessary. In the following, however, it will be assumed that even after step 203, at least one preferred language is still available. If this is not the case one possibility would be to prompt the user via the mobile communication device asking him whether he is also familiar with other languages or whether he wishes to receive the information in a language that is available to the server.

A preferred language based on the assigned priorities is selected in step 204. The language with the highest priority is selected.

In the following step 205, it is checked whether a dialog script is available for the selected preferred language. If yes, the method continues with step 206 and the server provides the corresponding dialog script for the mobile communication device.

In this example, it is assumed that the information is provided with the aid of a dialog between the user and the mobile communication device and/or the server. However, it might also be possible that the information can be presented without a dialog. In this case, step 205 could be replaced by a step according to which it is checked whether the information itself is available in the selected preferred language.

If no dialog script for the selected preferred language is available, the method continues with step 207. In this step, a preferred language is selected based on the priorities and the performance values of the translation means. A performance value is an indication for the quality of a translation means. Such a performance value can be obtained, for example, by translating a test sentence using different translation means and comparing the number of errors. The less errors are produced the better are the translation means and the performance value. As the priorities, the performance values can also be given in different ways; for example, the available translation means can be assigned numbers indicating the number of translation errors or simply by ascending number starting from 1.

For selecting a preferred language based on the priorities and the performance values, these two parameters are to be combined in some way to form a common criterion. For example, a priority and a performance value corresponding to a specific language can be multiplied by predetermined weights (for example, α and 1 - α with 0 ≤ α ≤ 1) and then summed. This results in new values giving a ranking of the preferred languages based on both the priority and the performance value. However, there are other possibilities to make this selection as well.

In the following step 208, the dialog script is translated into the selected preferred language using the corresponding translation means. In particular, the outputs to be presented to a user are to be translated.

In the last step 209, the translated dialog script is provided for the mobile communication device where it is run to perform a dialog in the preferred language between the mobile communication device and a user.

If a translation means of the mobile communication device is used, there would be no translation of the dialog script. Instead, a dialog script for a language is selected for which a translation means into a preferred language is available on the mobile communication device. This dialog script is transmitted to the mobile communication device where it is run. The corresponding translation means of the mobile communication device is activated. Each time an output is presented to the user, this output is translated into the preferred language. An input of the user is translated from the preferred language to the language of the dialog script.

In the above example of Fig. 2, a user can acquire the information from an automated information service. In some cases, however, a human operator has to be involved. For example, a user can contact a call center of a travel agency. This call, first of all, can be received by a corresponding server automatically requesting language information as in step 201 described above. After having received the corresponding language information, the server selects a preferred language in a similar way as described above. However, in this case, the relevant question is whether a human operator speaking one of the preferred languages is available. Therefore, a preferred language is selected based on the assigned priorities and/or on the fact which operator is available. The operators can also have an assigned performance value indicating their language capabilities regarding foreign languages for example. After selection of a preferred language, the correspending human operator is automatically contacted by the server such that a dialog between the operator and the user can be started.

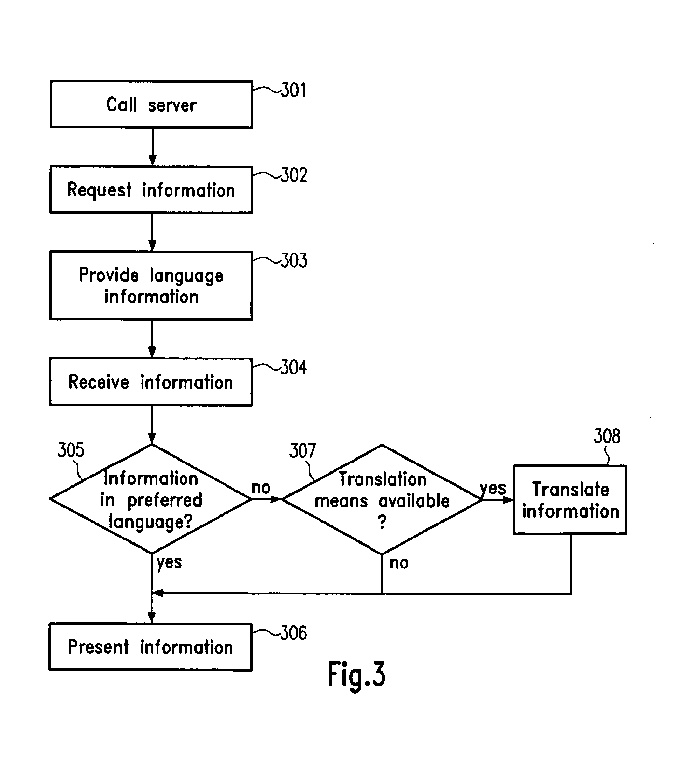

Fig. 3 illustrates an example of the course of action on the side of the mobile communication device. In the first step 301, the mobile communication device calls the server to establish a connection. As already stated above, this can be done via a digital telephone network or any other suitable network.

After a connection is established, the mobile communication device requests information in step 302. In the present example, this request comprises all necessary details in order to obtain the full information directly in response. However, it is also possible that the mobile communication device transmits a request for a dialog script, which, then is responsible for performing a dialog between the mobile communication device and the user to provide the information.

In step 203, the mobile communication device provides the server with language information. This language information comprises information one at least one preferred language of the mobile communication device.

In response, the mobile communication device receives information from the server in step 304.

In the following step 305, it is checked whether the information is in a preferred language. For example, in some cases, it can happen that the server is not able to perform the above multilingual method or has neither the information itself nor a translation means for a preferred language of the mobile communication device. In this case, the mobile communication device can receive the information in a language not being a preferred language.

If the information is in a preferred language, the information is presented to the user (step 306). If not, it is checked in step 307 whether a translation means is available on the mobile communication device. If this is the case, this translation means is activated and the information is translated into the preferred language. After that, the information is presented to the user.

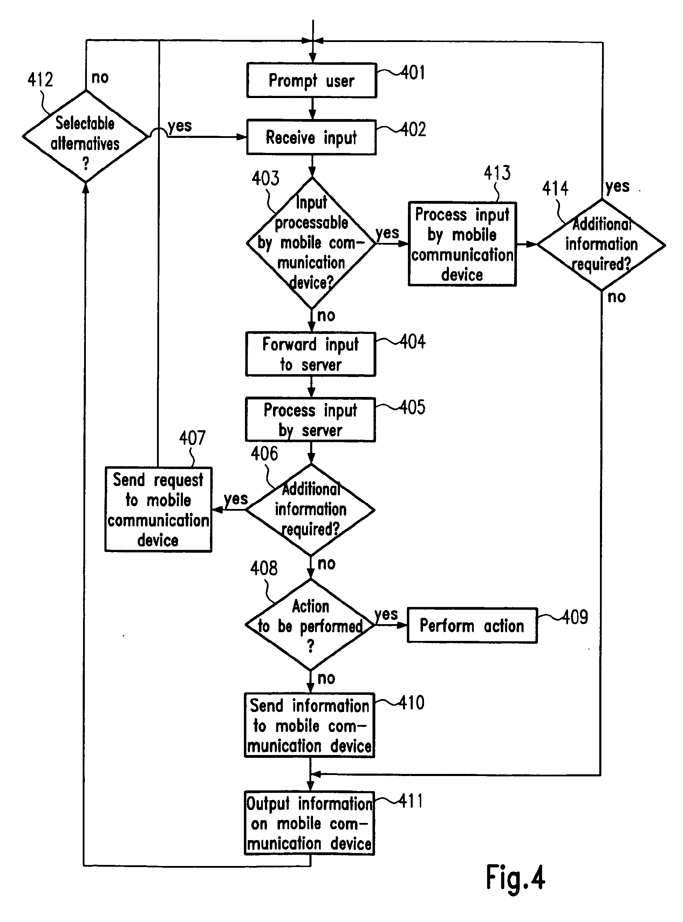

In more complex cases, it can be helpful or even necessary that a user is asked some questions in order to be able to give the required information. In this case, preferably, such a dialog is performed between the mobile communication device and the user. An example for a sequence of steps occurring during such a dialog is illustrated in Fig. 4.

During a corresponding dialog, a user is prompted one or several times (step 401). For example, after establishment of a data connection between the mobile communication device and a server of a travel agency or an airline, a typical dialog can start with: "Welcome to our automated flight information service. Please state the name of the departure city".

Such a prompt can be output in different ways. In particular, an acoustical output can be effected either by playing a previously stored speech signal or by synthesizing a corresponding speech signal. Furthermore, in addition or alternatively, an optical output on a display of the mobile communication device can be present. The acoustical and the optical output can but need not be identical. For example, in the case of the above-mentioned flight information, the term "Departure city?" can appear on the display at the beginning of the dialog.

In the next step 402, an input of a user is received. Again, this input can happen in different ways. First of all, a user can input the required information acoustically, for example, by speaking the word "Munich".

Furthermore, a haptic input can be used. For example, a user can enter the input via one or several keys that are part of the mobile communication device. If the mobile communication device comprises a touch screen, the user can also enter the input via this touch screen, for example, by selecting the city name out of a presented list of possible inputs. In the case of a touch screen, a graphical input is also possible which means that the input is written by hand onto the screen using a suitable pen, for example.

In the following step 403, it is checked whether the input can actually be processed by the mobile communication device. There are different possibilities of processing an input. First of all, in some cases, the input must be processed to be recognized at all. In the case of an acoustic input, for example, speech recognition has to be performed. For this, standard methods of speech recognition can be used. As an example, a speaker dependent speech recognition can be present on the mobile communication device. This speech recognition is adapted to the user. Alternatively and/or additionally, a speaker independent speech recognition can be performed on the server or on the mobile communication device. If an input is effected graphically via a touch screen, character or handwriting recognition has to be performed to recognize this input.

However, it might happen that the mobile communication device is unable to perform any speech recognition at all or to recognize a specific input utterance because no corresponding vocabulary is stored in the mobile communication device. For example, if a city name is to be recognized, the corresponding list of possible city names might be too large to be stored in or to be transmitted to the mobile communication device and is, thus, only present on the server. This may similarly apply to the case of a haptic or graphical input via a touch screen.

Then, in step 405, the input is processed by the server, for example, using an appropriate speech or character recognition. Such a forwarding of the input to the server is particularly useful if processing the input requires a large amount of data.

After having processed the input, it is checked in step 406 whether additional information (additional input) is required for continuation. If this is the case, the next step would be step 407 according to which a corresponding signal or request is sent to the mobile communication device. This results in another prompt (step 401) regarding this additional information.

In the above example, such a prompt could be "Please state the name of the destination city" (acoustical output) and "Destination city" (optical output on display).

Now, the user enters a corresponding input, "Madrid", for example, and the dialog continues as described above.

If not further information is required, it is checked in step 408 whether the input requires an action to be performed. An action can be the booking of a flight or of a hotel room. If yes, the corresponding action is performed, step 409.

In the example corresponding to the illustrated dialog, an alternative to performing an action is providing information. Thus, if no action is to be performed, the required information is sent to a mobile communication device (step 410). The mobile communication device outputs the information (step 411). (It is to be understood, however, that providing information need not be an alternative to performing an action but can be carried out in addition or in parallel.)

As already described above, such an output can be an acoustical and/or an optical output. In particular, the information can be output on a touch screen such that different alternatives are presented to the user who can choose one of these alternatives via the touch screen. For example, the user is provided with a plurality of possible alternatives, in the present case, a set of possible flight connections from Munich to Madrid. The user is enabled to select one of the flights. Therefore, the user can select one of the flights by touching the screen at the appropriate position. If number keys such as the digits on a mobile phone are available, the user may also hit one of the keys 1, 2 or 3. According to a further alternative, the user can speak the connection by saying the flight number or the time (e.g., "Flight 4260" or "The connection departing at 14:55, please").

If the output comprises selectable alternatives (step 412), the dialog returns to step 402 awaiting a further input, i.e., the selection of an alternative. If no selectable alternatives are present, the dialog can return to step 401.

If it turns out in step 403 that the mobile communication device can process the present input, the following step would be step 413 according to which the input is actually processed by the mobile communication device itself. In the subsequent step 414, it is again checked whether additional information is required or not.

In order to perform the steps of the methods described above, preferably, the mobile communication device and/or the server are provided with corresponding computer-executable instructions.

The above described examples are intended as illustrations only. Different combinations of the described features are possible as well. For example, the capabilities and responsibilities of the mobile communication device and the server can be distributed differently.

## Claims

1. Method for providing information by a server via a mobile communication device, comprising the steps of
a) automatically determining a preferred language of the mobile communication device by the server,
b) providing information in a preferred language for the mobile communication device by the server,
**characterized in that**
step a) comprises determining at least two preferred languages and ranking the preferred languages according to a predetermined criterion,
wherein translation means for more than one language are present, each translation means has an assigned performance value, and the preferred languages are ranked based on the performance value.

2. Method according to claim 1, wherein step a) comprises requesting preferred language information by the server from the mobile communication device.

3. Method according to claim 2, wherein the requesting step comprises requesting the language settings of the mobile communication device and/or of speech recognition means of the mobile communication device.

4. Method according to one of the preceding claims, wherein in step b) the preferred language for the provided information is selected from the at least two preferred languages based on the ranking.

5. Method according to one of the preceding claims, wherein each preferred language of the mobile communication device has an assigned priority and the preferred languages are ranked based on the priority.

6. Method according to one of the preceding claims, wherein step b) comprises providing a dialog script for the mobile communication device by the server for performing a dialog between the mobile communication device and a user, and running the dialog script on the mobile communication device.

7. Method according to claim 6, wherein providing a dialog script comprises selecting a dialog script for the preferred language by the server.

8. Method according to one of the preceding claims, wherein step b) comprises activating a translation means of the server and/or the mobile communication device for the preferred language.

9. Method according to claim 8 in combination with claim 7, wherein activating a translation means is performed if no dialog script for the preferred language can be selected.

10. Method according to one of the preceding claims, wherein step b) comprises selecting a human operator for the preferred language.

11. Method according to one of the preceding claims, wherein step b) comprises running a dialog script on the server for performing a dialog between the server and a user.

12. Method according to claim 11, wherein running a dialog script on the server is initiated by the mobile communication device.

13. Method for communicating information from a server via a mobile communication device, comprising the steps of
establishing a data connection between the server and the mobile communication device,
providing information from a server according to the method of one of the claims 1-12, and
receiving information by a mobile communication device comprising automatically transmitting preferred language information from the mobile communication device to the server.

14. Method according to claim 13, wherein automatically transmitting is performed upon request of the server.

15. Method according to claim 13 or 14, comprising transmitting the language settings of the mobile communication device and/or of a speech recognition means of the mobile communication device.

16. Method according to one of the claims 13-15, further comprising receiving a dialog script for performing a dialog between the mobile communication device and a user from the server, and running the dialog script on the mobile communication device.

17. Method according to one of the claims 13 - 16, further comprising initiating running a dialog script on the server for performing a dialog between the server and a user.

18. Method according to one of the claims 13 - 17, further comprising activating a translation means of the mobile communication device for the preferred language.

19. Computer program product, comprising one or more computer readable media having computer-executable instructions for performing the steps of the method of one of the preceding claims when run on a computer.

## Patentansprüche

1. Verfahren zum Bereitstellen von Informationen durch einen Server über eine mobile Kommunikationseinrichtung, die Schritte umfassend
a) automatisches Bestimmen einer bevorzugten Sprache der mobilen Kommunikationseinrichtung durch den Server,
b) Bereitstellen von Informationen in einer bevorzugten Sprache für die mobile Kommunikationseinrichtung durch den Server,
**dadurch gekennzeichnet, dass**
Schritt a) das Bestimmen von zumindest zwei bevorzugten Sprachen und das Klassifizieren in einer Rangfolge der bevorzugten Sprachen gemäß einem vorbestimmten Kriterium umfasst,
wobei Übersetzungsmittel für mehr als eine Sprache vorliegen, wobei jedes Übersetzungsmittel einen zugewiesenen Leistungsbewertungswert aufweist und die bevorzugten Sprachen auf der Grundlage des Leistungsbewertungswerts in der Rangfolge klassfiziert werden.

2. Verfahren gemäß Anspruch 1, in dem Schritt a) das Anfordern von Informationen über eine bevorzugte Sprache von der mobilen Kommunikationseinrichtung durch den Server umfasst.

3. Verfahren gemäß Anspruch 2, in dem der Anforderungsschritt das Anfordern der Spracheinstellungen der mobilen Kommunikationseinrichtung und/oder einer Spracherkennungseinrichtung der mobilen Kommunikationseinrichtung umfasst.

4. Verfahren gemäß einem der vorhergehenden Ansprüche, in dem in Schritt b) die für die bereitgestellten Informationen bevorzugte Sprache aus den zumindest zwei bevorzugten Sprachen auf der Grundlage der Rangfolge ausgewählt wird.

5. Verfahren gemäß einem der vorhergehenden Ansprüche, in dem jede bevorzugte Sprache der mobilen Kommunikationseinrichtung eine zugewiesene Priorität aufweist und die bevorzugten Sprachen auf der Grundlage der Priorität in einer Rangfolge klassfiziert werden.

6. Verfahren gemäß einem der vorhergehenden Ansprüche, in dem Schritt b) das Bereitstellen eines Dialogskripts für die mobile Kommunikationseinrichtung durch den Server zum Ausführen eines Dialogs zwischen der mobilen Kommunikationseinrichtung und einem Nutzer und das Laufenlassen des Dialogskripts auf der mobilen Kommunikationseinrichtung umfasst.

7. Verfahren gemäß Anspruch 6, in dem das Bereitstellen eines Dialogskripts das Auswählen eines Dialogskripts für die bevorzugte Sprache durch den Server umfasst.

8. Verfahren gemäß einem der vorhergehenden Ansprüche, in dem Schritt b) das Aktivieren eines Übersetzungsmittels des Servers und/oder der mobilen Kommunikationseinrichtung für die bevorzugte Sprache umfasst.

9. Verfahren gemäß Anspruch 8 in Kombination mit Anspruch 7, in dem das Aktivieren eines Übersetzungsmittels ausgeführt wird, wenn kein Dialogskript für die bevorzugte Sprache ausgewählt werden kann.

10. Verfahren gemäß einem der vorhergehenden Ansprüche, in dem Schritt b) das Auswählen eines menschlichen Telefonisten für die bevorzugte Sprache umfasst.

11. Verfahren gemäß einem der vorhergehenden Ansprüche, in dem Schritt b) das Laufenlassen eines Dialogskripts auf dem Server zum Ausführen eines Dialogs zwischen dem Server und einem Nutzer umfasst.

12. Verfahren gemäß Anspruch 11, in dem das Laufenlassen eines Dialogskripts auf dem Server durch die mobile Kommunikationseinrichtung initiiert wird.

13. Verfahren zum Übermitteln von Informationen von einem Server über eine mobile Kommunikationseinrichtung, das die Schritte umfasst
Aufbauen einer Datenverbindung zwischen dem Server und der mobilen Kommunikationseinrichtung,
Bereitstellen von Informationen von dem Server gemäß dem Verfahren von einem der Ansprüche 1-12, und
Empfangen von Informationen durch eine mobile Kommunikationseinrichtung, das automatische Übertragen von Informationen über eine bevorzugte Sprache von der mobilen Kommunikationseinrichtung zu dem Server umfassend.

14. Verfahren gemäß Anspruch 13, in dem das automatische Übertragen auf Anfrage des Servers hin ausgeführt wird.

15. Verfahren gemäß Anspruch 13 oder 14, das das Übertragen der Spracheinstellungen der mobilen Kommunikationseinrichtung und/oder einer Spracherkennungseinrichtung der mobilen Kommunikationseinrichtung umfasst.

16. Verfahren gemäß einem der Ansprüche 13 - 15, das weiterhin das Empfangen eines Dialogskripts von dem Server zum Ausführen eines Dialogs zwischen der mobilen Kommunikationseinrichtung und einem Nutzer und das Laufenlassen des Dialogskripts auf der mobilen Kommunikationseinrichtung umfasst.

17. Verfahren gemäß einem der Ansprüche 13 - 16, das weiterhin das Initiieren des Laufenlassens eines Dialogskripts auf dem Server zum Ausführen eines Dialogs zwischen dem Server und einem Nutzer umfasst.

18. Verfahren gemäß einem der Ansprüche 13 - 17, das weiterhin das Aktivieren eines Übersetzungsmittels der mobilen Kommunikationseinrichtung für die bevorzugte Sprache umfasst.

19. Computerprogrammprodukt, das ein oder mehrere computerlesbare Medien umfasst, die computerausführbare Anweisungen zum Ausführen der Schritte des Verfahrens gemäß einem der vorhergehenden Ansprüche, wenn sie auf einem Computer laufen, aufweist.

## Revendications

1. Procédé permettant de fournir des informations à l'aide d'un serveur via un dispositif de communication mobile, comprenant les étapes consistant à
a) déterminer automatiquement une langue préférée du dispositif de communication mobile à l'aide du serveur,
b) fournir des informations dans une langue préférée pour le dispositif de communication mobile à l'aide du serveur,
**caractérisé en ce que**
l'étape a) comprend la détermination d'au moins deux langues préférées et le classement des langues préférées selon un critère prédéterminé,
dans lequel des moyens de traduction de plus d'une langue sont présents, chaque moyen de traduction ayant une valeur de performance attribuée, et les langues préférées étant classées sur la base de la valeur de performance.

2. Procédé selon la revendication 1, dans lequel l'étape a) comprend le fait de demander des informations de langue préférée à l'aide du serveur depuis le dispositif de communication mobile.

3. Procédé selon la revendication 2, dans lequel l'étape de demande comprend le fait de demander les paramètres de langue du dispositif de communication mobile et/ou des moyens de reconnaissance de la parole du dispositif de communication mobile.

4. Procédé selon l'une des revendications précédentes, dans lequel, à l'étape b), la langue préférée pour les informations fournies est choisie parmi au moins deux langues préférées sur la base du classement.

5. Procédé selon l'une des revendications précédentes, dans lequel chaque langue préférée du dispositif de communication mobile possède une priorité attribuée et les langues préférées sont classées sur la base de la priorité.

6. Procédé selon l'une des revendications précédentes, dans lequel l'étape b) comprend le fait de fournir un script de dialogue pour le dispositif de communication mobile à l'aide du serveur en effectuant un dialogue entre le dispositif de communication mobile et un utilisateur, et d'exécuter le script de dialogue sur le dispositif de communication mobile.

7. Procédé selon la revendication 6, dans lequel le fait de fournir un script de dialogue comprend la sélection d'un script de dialogue pour la langue préférée à l'aide du serveur.

8. Procédé selon l'une des revendications précédentes, dans lequel l'étape b) comprend l'activation d'un moyen de traduction du serveur et/ou du dispositif de communication mobile pour la langue préférée.

9. Procédé selon la revendication 8 en combinaison avec la revendication 7, dans lequel l'activation d'un moyen de traduction est effectuée si aucun script de dialogue pour la langue préférée ne peut être sélectionné.

10. Procédé selon l'une des revendications précédentes, dans lequel l'étape b) comprend la sélection d'un opérateur humain pour la langue préférée.

11. Procédé selon l'une des revendications précédentes, dans lequel l'étape b) comprend l'exécution d'un script de dialogue sur le serveur afin d'effectuer un dialogue entre le serveur et un utilisateur.

12. Procédé selon la revendication 11, dans lequel l'exécution d'un script de dialogue sur le serveur est lancée par le dispositif de communication mobile.

13. Procédé de communication d'informations depuis un serveur via un dispositif de communication mobile, comprenant les étapes consistant à
établir une connexion de données entre le serveur et le dispositif de communication mobile,
fournir des informations depuis un serveur selon le procédé de l'une des revendications 1 à 12, et
recevoir des informations à l'aide d'un dispositif de communication mobile, comprenant la transmission automatique des informations de langue préférée depuis le dispositif de communication mobile vers le serveur.

14. Procédé selon la revendication 13, dans lequel la transmission automatique est effectuée à la demande du serveur.

15. Procédé selon la revendication 13 ou 14, comprenant la transmission des paramètres de langue du dispositif de communication mobile et/ou d'un moyen de reconnaissance de la parole du dispositif de communication mobile.

16. Procédé selon l'une des revendications 13 à 15, comprenant en outre la réception d'un script de dialogue permettant d'effectuer un dialogue entre le dispositif de communication mobile et un utilisateur depuis le serveur, et l'exécution du script de dialogue sur le dispositif de communication mobile.

17. Procédé selon l'une des revendications 13 à 16, comprenant en outre le déclenchement de l'exécution d'un script de dialogue sur le serveur afin d'effectuer un dialogue entre le serveur et un utilisateur.

18. Procédé selon l'une des revendications 13 à 17, comprenant en outre l'activation d'un moyen de traduction du dispositif de communication mobile pour la langue préférée.

19. Produit de programme informatique, comprenant un ou plusieurs support(s) lisible(s) par un ordinateur ayant des instructions exécutables par un ordinateur permettant d'effectuer les étapes du procédé selon l'une des revendications précédentes lorsqu'il est exécuté sur un ordinateur.
